# EUROPÄISCHE PATENTSCHRIFT

(11) **EP 2 480 803 B1**
(45) Veröffentlichungstag und Bekanntmachung des Hinweises auf die Patenterteilung: **24.09.2014**
(21) Anmeldenummer: 10745568.5
(22) Anmeldetag: 18.08.2010
(51) Int. Cl.: F16H 61/24, F16H 61/22

(54) **FAHRZEUG MIT EINEM GETRIEBE UND EINEM WÄHLELEMENT ZUM SCHALTEN VON GETRIEBEGÄNGEN**
VEHICLE HAVING A TRANSMISSION AND A SELECTION ELEMENT FOR SHIFTING GEARS
VÉHICULE POURVU D'UNE TRANSMISSION ET D'UN ÉLÉMENT DE SÉLECTION POUR PASSER DES VITESSES

(30) Priorität: 22.09.2009 DE 102009042524
(43) Veröffentlichungstag der Anmeldung: 01.08.2012
(73) Patentinhaber: Bayerische Motoren Werke Aktiengesellschaft, 80809 München (DE)
(72) Erfinder: LINDNER, Matthias, 82166 Graefelfing (DE); TILLE, Thomas, 81249 Muenchen (DE)
(86) Internationale Anmeldenummer: PCT/EP2010/005059
(87) Internationale Veröffentlichungsnummer: WO 2011/035832

(56) Entgegenhaltungen:
- EP-A2- 0 035 252
- DE-A1- 3 419 168
- DE-A1- 19 920 650
- DE-A1- 19 957 866

## Beschreibung

Die vorliegende Erfindung betrifft ein Fahrzeug gemäß dem Oberbegriff des Patentanspruches 1.

Ein derartiges Fahrzeug ist aus der DE 199 20 650 A1 bekannt. Zum relevanten Stand der Technik zählen ferner die EP 35 252 A2, DE 34 19 168 A1, DE 199 57 866 A1, sowie die DE 198 49 076 A.

Bei Fahrzeugen mit Handschaltgetrieben ist der "Schalthebel" üblicherweise über eine mechanische Verbindung, z. B. über ein Gestänge oder einen Bowdenzug, mit dem Getriebe verbunden. Im Pkw-Bereich gibt es Handschaltgetriebe mit bis zu 6 Vorwärtsgängen und einem Rückwärtsgang, die in Bezug auf den Wählhebel in einem sogenannten "H-Schema" angeordnet sind. Wenngleich es im Lkw-Bereich Schaltgetriebe mit bis zu 10 im H-Schema angeordneten Vorwärtsgänge gibt, werden im Pkw-Bereich 6 Vorwärtsgänge als Obergrenze angesehen, da bei mehr als 6 in einem H-Schema angeordneten Vorwärtsgängen die Gefahr von Fehlschaltungen beträchtlich zunähme.

Bei Handschaltgetrieben, bei denen der Wählhebel mechanisch mit dem Getriebe gekoppelt ist, treten am Wählhebel relativ große Schaltwege auf, was entsprechend viel Bauraum erfordert. Ein weiterer Nachteil mechanisch mit dem Getriebe gekoppelter Wählhebel besteht darin, dass für die Varianten "Handschalter" und Automatikfahrzeug ein- und desselben Fahrzeugtyps unterschiedliche Mittelkonsolen benötigt werden, was die Herstellkosten erhöht.

Aufgabe der Erfindung ist es, ein Fahrzeug zu schaffen, bei dem ein Getriebe in neuartiger Weise mittels eines Wählelements ansteuerbar bzw. schaltbar ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Fahrzeug mit einem Getriebe mit mindestens einem ansteuerbaren "Aktuator", der zum Ein- und/oder Auslegen mindestens eines Getriebeganges vorgesehen ist. Bei dem "Aktuator" kann sich um ein elektrisch bzw. elektronisch, hydraulisch, pneumatisch oder in anderer Weise ansteuerbares Stellelement handeln, mittels dem ein oder mehrere Gänge oder Schaltstufen des Getriebes schaltbar, d. h. einlegbar und/oder auslegbar sind. Zum Ansteuern des mindestens einen Aktuators ist ein von Hand zu bedienendes "Wählelement" vorgesehen, das z. B. die Form eines Wählhebels haben kann. Durch Betätigen des Wählelements wird der Aktuator angesteuert, welcher daraufhin einen Gang bzw. eine Getriebestufe einlegt oder auslegt. Zum Einlegen eines Getriebeganges bzw. einer Getriebestufe muss das Wählelement zunächst in Richtung einer vorgegebenen, dem betreffenden Getriebegang bzw. der betreffenden Getriebestufe zugeordneten Endstellung bewegen werden. Der Vorgang zum Einlegen eines Getriebeganges bzw. einer Getriebestufe wird also initiiert, in dem das Wählelement in Richtung der betreffenden Endstellung bewegt wird, ohne dass die Endstellung bereits erreicht wird.

Der Kern der Erfindung besteht darin, dass das Wählelement nur dann in die dem betreffenden Getriebegang bzw. betreffenden Getriebestufe zugeordnete Endstellung gebracht werden kann, wenn der betreffende Getriebegang tatsächlich bereits eingelegt ist.

Wie bereits erwähnt ist das Wählelement vorzugsweise elektrisch bzw. elektronisch mit dem Aktuator verbunden. Eine derartige "Shift-By-Wire-Schaltung" ermöglicht es, das Wählelement sehr kompakt z.B. in der Form eines kleinen Knaufs o.ä. auszuführen, wie es z.B. von modernen Wählhebeln von Automatikfahrzeugen bekannt ist.

Nach einer Weiterbildung der Erfindung ist das Wählelement bzw. ist der Wählhebel an einem "Mechatronikelement" angeordnet, welches der Stellung des Wählelements entsprechende Steuersignale erzeugt und eine Bewegung des Wählelements in die einem Getriebegang zugeordnete Endstellung nur dann ermöglicht, wenn der Getriebegang tatsächlich eingelegt ist.

Hierzu kann eine Sensorik vorgesehen sein, die mit dem Mechatronikelement elektrisch verbundene bzw. in das Mechatronikelement integriert ist. Die Sensorik sensiert den Schaltzustand des betreffenden Getriebeganges, d.h. ob der angewählte Getriebegang von dem zugeordneten Aktuator tatsächlich bereits eingelegt worden ist oder ob er ausgelegt ist. Liegt das entsprechende "Einlegesignal" vor, so gibt das Mechatronikelement die Endstellung frei, d.h. das Wählelement kann vom Fahrer erst dann in die zugeordnete Endstellung bewegt werden.

Nach einer Weiterbildung der Erfindung weist das Mechatronikelement eine Dämpfungseinrichtung auf, die ein Bewegen des Wählelements in die Endstellung dämpft bzw. unterbindet, solange der der Endstellung zugeordnete Getriebegang noch nicht eingelegt ist, d.h. so lange von der Sensorik kein entsprechendes Einlegesignal erzeugt wird.

Es kann vorgesehen sein, dass das Wählelement haptisch spürbar in der dem betreffenden Getriebegang zugeordneten Endstellung einrastet, sobald diese erreicht ist.

Ferner kann eine Überwachungseinrichtung zur Unterbindung von Fehlschaltversuchen, insbesondere von offensichtlichen Fehlschaltversuchen, vorgesehen sein. So kann das Einlegen bestimmter Getriebegänge in Abhängigkeit aktuell vorliegender Fahrzustandsparameter unterbunden werden. Beispielsweise kann vorgesehen sein, dass bei stehendem Fahrzeug lediglich der Rückwärtsgang, der erste und vielleicht noch der zweite Vorwärtsgang anwählbar sind, nicht aber höhere Vorwärtsgänge. Desweiteren kann vorgesehen sein, dass während der Fahrt ein Zurückschalten nur in solche Getriebegänge zugetassen wird, in denen es bei der aktuellen Fahrzeuggeschwindigkeit nicht zu Schädigungen des Getriebes kommen kann.

Die Überwachungseinrichtung kann so ausgeführt sein, dass das Mechatronikelement bzw. die darin integrierte "Dämpfungseinrichtung" eine Bewegung des Wählelements in Richtung einer "gesperrten Endstellung" bzw. in Richtung eines aufgrund aktuell vorliegender Fahrzustandsparameter gesperrten Getriebeganges gänzlich sperrt, d.h. dass das Wählelement überhaupt nicht in die betreffende "Schaltgasse" bewegt werden kann. Alternativ dazu kann vorgesehen sein, dass das Wählelement zwar ein Stück weit in Richtung einer aktuell gesperrten Endstellung bzw. ein Stück weit in eine gesperrte Schaltgasse bewegt werden kann, dass dies aber nicht zur Ansteuerung des betreffenden Aktuators führt und dass insbesondere ein Erreichen der betreffenden Endstellung gesperrt ist.

Das primäre Anwendungsgebiet der Erfindung sind Fahrzeuge mit "Handschaltgetrieben". Unter dem Begriff "Handschaltgetriebe" wird ein Getriebe verstanden, das ausschließlich durch Betätigen des Wählelements von einem Getriebegang in einen anderen schaltbar ist, d. h. das nicht etwa automatisch von einem Getriebesteuergerät geschaltet wird.

Ähnlich wie bei herkömmlichen Fahrzeugen mit Handschaltgetrieben kann eine über ein Fußpedal betätigbare Trennkupplung vorgesehen sein, die ein weiches Schalten des Getriebes ermöglicht. Zusätzlich kann vorgesehen sein, dass durch eine Sensorik überwacht wird, ob die Kupplung geöffnet oder geschlossen ist und dass ein Ein- bzw. Auslegen eines Getriebeganges durch Ansteuern des zugeordneten Aktuators nur bei vollständig geöffneter Kupplung zugelassen wird.

Prinzipiell ist die Erfindung aber auch im Zusammenhang mit Automatikgetrieben anwendbar, d.h. mit Getrieben, die gemäß einer vorgegebenen Schaltlogik von einer Elektronik in Abhängigkeit verschiedener Fahrzustandsparameter angesteuert bzw. geschaltet werden und die darüber hinaus zusätzlich manuell über eine "Shift-By-Wire-Schaltung" geschaltet werden können.

Ferner kann vorgesehen sein, dass in einer im Sichtbereich des Fahrers, z.B. in einer vorderhalb des Lenkrads angeordneten Anzeigeeinrichtung, insbesondere in einem sogenannten Kombiinstrument, der momentan eingelegte Getriebegang optisch angezeigt wird. Alternativ oder ergänzend dazu kann vorgesehen sein, dass an dem Wählelement, insbesondere in einem oberen Bereich des Wählelements eine Anzeigeeinrichtung vorgesehen ist, mittels der der momentan eingelegte Getriebegang optisch, z.B. alphanummerisch oder symbolisch, angezeigt wird.

Mittels des Wählelements können mehrere Gänge, insbesondere mehr als die heute bei Handschaltgetrieben übliche Maximalzahl von 6 Vorwärtsgängen fehlerfrei geschaltet werden. Jedem der schaltbaren Getriebegänge ist jeweils eine vorgegebene Endstellung des Wählelements zugeordnet. Die Endstellungen können entsprechend einem H-Schema in mehreren zueinander parallelen Schaltgassen angeordnet sein. Da das Wählelement anders als bei herkömmlichen Handschaltgetrieben nicht mechanisch mit dem Getriebe gekoppelt ist, ist man aber nicht auf ein H-Schema festgelegt, sondern kann die Endstellungen in vielfältiger anderer Weise anordnen.

Zusammenfassend werden mit der Erfindung insbesondere folgende Vorteile erreicht:
- Verbrauchssenkungspotential, da auch mehr als 6 Gänge sinnvoll darstellbar und gut beherrschbar sind;
- Kurze Schaltwege und kleine Schaltkräfte und somit hoher Bedienkomfort;
- Möglichkeit der Verwendung ein- und derselben Mittelkonsole sowohl fürFahrzeuge mit "Handschaltgetriebe" als auch für Fahrzeuge mit "Automatikgetriebe";
- Ergonomischere Gestaltungsmöglichkeiten in Bezug auf die Mittelkonsole;
- Verringerung des Geräuschniveaus durch den Einsatz von Getrieben mit 7 oder mehr Vorwärtsgängen;
- Verringerung der Gefahr von Schaltfehlern;
- Verbesserung der Bediensicherheit durch Gangstufenanzeige am Wählelement.

Im Folgenden wird die Erfindung im Zusammenhang mit der Zeichnung näher erläutert. Es zeigen:
- Figur 1: das Grundprinzip der Erfindung in schematischer Darstellung; und
- Figuren 2,3: Ausführungsbeispiele von Wählelementen gemäß der Erfindung.

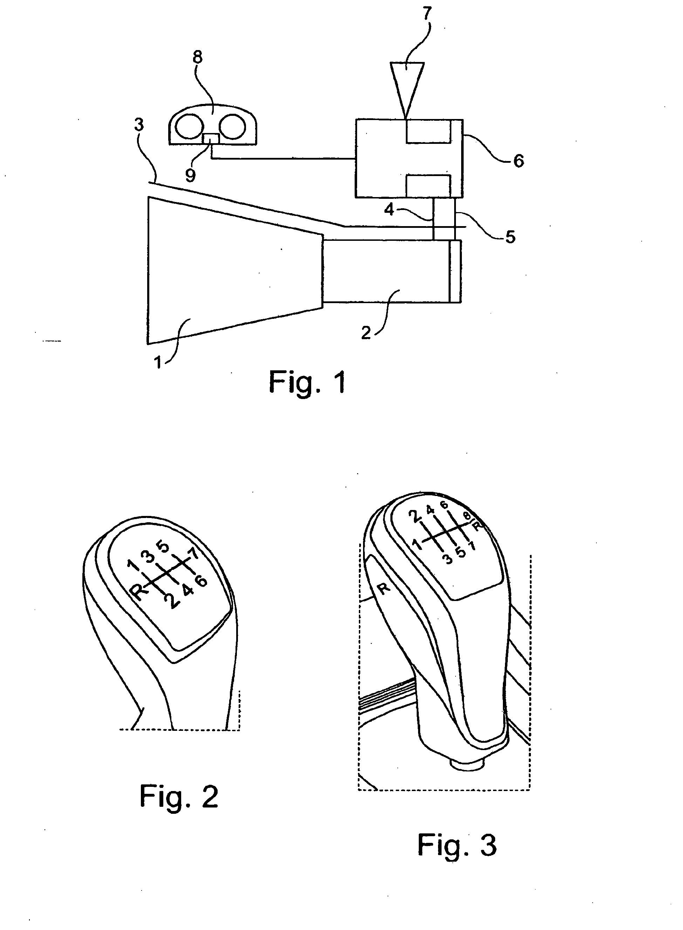

Figur 1 zeigt ein Handschaltgetriebe 1 mit einem Aktuatormodul 2, in dem mehrere elektrisch bzw. elektronisch ansteuerbare Aktuatoren zum Ein- bzw. Auslegen von Getriebegängen bzw. Gangstufen vorgesehen sind. In dem Aktuatormodul 2 ist ferner eine hier nicht näher dargestellte Sensorik integriert, die sensiert, ob bestimmte Gänge eingelegt bzw. ausgelegt sind. Das Getriebe 1 und das Aktuatormodul 2 sind in einem Mitteltunnel angeordnet, von dem in der Figur 1 gezeigten Querschnitt lediglich das Tunnelblech 3 zu erkennen ist.

Das Aktuatormodul 2 ist über elektrische Leitungen 4, 5 mit einem Mechatronikelement 6 verbunden, das z. B. in einer hier nicht näher dargestellten Mittelkonsole eines Fahrzeuges angeordnet ist. An der Oberseite des Mechatronikelements 6 is ein Wählelement 7 angeordnet. Das Wählelement 7 kann z. B. schwenkbar und/oder verschiebbar und/oder drehbar oder in anderer Weise bewegbar an dem Mechatronikelement 6 angeordnet sein.

In das Mechatronikelement 6 können diverse Leistungstreiber sowie ein "Schaltwegdämpfer" integriert sein, welcher die Bewegung des Wählelements 7 in Richtung einer einem Getriebegang bzw. einer Getriebestufe zugeordneten Endstellung dämpft bzw. unterbindet, so lange der betreffende Getriebegang bzw. die betreffende Getriebestufe noch nicht eingelegt ist. Anders ausgedrückt, kann das Wählelement nur dann in den betreffenden Getriebegang zugeordnete Endstellung bewegt werden, wenn von der in das Aktuatormodul integrierten Überwachungssensorik ein entsprechendes Signal vorliegt, dass der betreffende Getriebegang tatsächlich eingelegt ist.

Zur Verbesserung der Bediensicherheit kann vorgesehen sein, dass in einem Kombiinstrument 8, das vorderhalb eines hier nicht näher dargestellten Lenkrads des Fahrzeugs angeordnet sein kann, eine Anzeige 9 enthalten ist, in der der momentan eingelegte Getriebegang angezeigt wird.

Figur 2 zeigt ein Ausführungsbeispiel eines Wählelements mit sieben Vorwärtsgängen und einem Rückwärtsgang. Die Vorwärtsgangstufen 1 - 6 sind in herkömmlicher Weise in einem H-Schema angeordnet. Der siebte Vorwärtsgang wird durch "nach rechts verschwenken" des Wählelements angewählt. Der Rückwärtsgang wird durch entgegengesetztes "nach links verschwenken" des Wählelements angewählt.

Figur 3 zeigt ein Ausführungsbeispiel eines Wählelements, bei dem die Vorwärtsgangstufen 2 - 7 in einem H-Schema angeordnet sind. Der erste Gang, bei dem es sich nur um einen Anfahrgang handeln kann, ist links und der Rückwärtsgang ist rechts bezüglich des H-Schemas angeordnet.

## Patentansprüche

1. Fahrzeug, mit
- einem Getriebe (1) mit mindestens einem ansteuerbaren Aktuator (2), der zum Ein- und/oder Auslegen mindestens eines Getriebeganges vorgesehen ist,
- einem von Hand zu betätigenden Wählelement (7), mittels dem der Aktuator ansteuerbar und dadurch mindestens ein Getriebegang ein- bzw. auslegbar ist, wobei das Wählelement (7) zum Einlegen eines Getriebeganges zunächst in Richtung einer vorgegebenen, dem betreffenden Getriebegang zugeordneten Endstellung zu bewegen ist, wobei das Wählelement (7) nur dann in die dem betreffenden Getriebegang zugeordnete Endstellung bewegbar ist, wenn der betreffende Getriebegang tatsächlich eingelegt ist,
**dadurch gekennzeichnet, dass**
• der Aktuator (2) ein elektrisch oder hydraulisch ansteuerbarer Aktuator ist und
• das Wählelement (7) von Hand spürbar in der dem betreffenden Getriebegang zugeordneten Endstellung einrastet, sobald der betreffende Getriebegang eingelegt ist.

2. Fahrzeug nach Anspruch 1, **dadurch gekennzeichnet, dass** das Wählelement (7) an einem Mechatronikelement (6) angeordnet ist, welches der Stellung des Wählelements (7) entsprechende Steuersignale erzeugt und eine Bewegung des Wählelements (7) in die einem Getriebegang zugeordnete Endstellung nur dann ermöglicht, wenn der Getriebegang tatsächlich eingelegt ist.

3. Fahrzeug nach einem der Anspruch 2, **dadurch gekennzeichnet, dass** eine mit dem Mechatronikelement (6) elektrisch verbundene Sensorik vorgesehen ist, die sensiert, ob der angewählte Getriebegang tatsächlich eingelegt ist.

4. Fahrzeug nach einem der Ansprüche 2 oder 3, **dadurch gekennzeichnet, dass** das Mechatronikelement (6) eine Dämpfungseinrichtung aufweist, die ein Bewegen des Wählelements (7) in eine Endstellung dämpft oder unterbindet, solange der der Endstellung zugeordnete Getriebegang noch nicht eingelegt ist.

5. Fahrzeug nach einem der Ansprüche 1 bis 4, **dadurch gekennzeichnet, dass** das Getriebe (1) ein Handschaltgetriebe ist, das ausschließlich durch Betätigen des Wählelements (7) von einem Getriebegang in einen anderen Getriebegang schaltbar ist.

6. Fahrzeug nach einem der Ansprüche 1 bis 5, **dadurch gekennzeichnet, dass** eine mittels eines Fußpedals bedienbare Kupplung vorgesehen ist und das Ein- bzw. Auslegen eines Getriebeganges nur bei geöffneter Kupplung zugelassen wird.

7. Fahrzeug nach einem der Ansprüche 1 bis 6, **dadurch gekennzeichnet, dass** das Getriebe ein Automatikgetriebe ist, das gemäß einer vorgegebenen Schaltlogik von einer Elektronik in Abhängigkeit verschiedener Fahrzustandsparameter angesteuert bzw. geschaltet wird.

8. Fahrzeug nach einem der Ansprüche 1 bis 7, **dadurch gekennzeichnet, dass** in einem im Sichtbereich des Fahrers angeordneten Kombiinstrument (8) der momentan eingelegte Getriebegang optisch angezeigt wird.

9. Fahrzeug nach einem der Ansprüche 1 bis 8, **dadurch gekennzeichnet, dass** an dem Wählelement (7) eine Anzeigeeinrichtung vorgesehen ist, in der der momentan eingelegte Getriebegang optisch angezeigt wird.

10. Fahrzeug nach einem der Ansprüche 1 bis 9, **dadurch gekennzeichnet, dass** mittels des Wählelements (7) mehrere Getriebegänge anwählbar sind, denen jeweils eine vorgegebene Endstellung des Wählelements (7) zugeordnet ist, wobei die Endstellungen entsprechend einem H-Schema in zwei oder mehreren parallelen Schaltgassen angeordnet sind.

11. Fahrzeug nach einem der Ansprüche 1 bis 10, **dadurch gekennzeichnet, dass** in Abhängigkeit eines oder mehrerer aktuell vorliegender Fahrzustandsparameter, insbesondere der Fahrzeuggeschwindigkeit, eine Bewegung des Wählelements (7) in Richtung einer Endstellung, zumindest aber eine Bewegung des Wählelements (7) in eine Endstellung und ein Einlegen des betreffenden Getriebeganges gesperrt ist.

## Claims

1. A vehicle comprising
- a gear unit (1) with at least one actuatable actuator (2) for engaging and/or disengaging at least one gear,
- a hand-operated selector element (7) for actuating the actuator so as to engage or disengage at least one gear, wherein the selector element (7) for engaging a gear is first moved towards a set end position corresponding to the respective gear, wherein the selected element (7) is movable into the end position corresponding to the said gear only when the gear in question has actually been engaged,
**characterised in that**
• the actuator (2) is an electric or hydraulically actuatable actuator and
• the selector element (7) engages, traceable by hand, in the end position corresponding to the respective gear as soon as the respective gear is engaged.

2. A vehicle according to claim 1, **characterised in that** the selector element (7) is disposed in a mechanical electronic element (6) which generates control signals corresponding to the position of the selector element (7) and enables movement of the selector element (7) into an end position corresponding to a gear only when the gear has actually been engaged.

3. A vehicle according to claim 2, **characterised in that** a sensor unit electrically connected to the mechanical element (6) senses whether the selected gear is actually engaged.

4. A vehicle according to claim 2 or claim 3, **characterised in that** the element (6) is a damping device which damps or prevents movement of the selector element (7) into an end position until the gear corresponding to the end position has been engaged.

5. A vehicle according to any of claims 1 to 4, **characterised in that** the gear unit (1) is a manual gear unit which can be shifted from one gear to another only by actuating the selector element (7).

6. A vehicle according to any of claims 1 to 5, **characterised in that** a pedal-operated clutch is provided and a gear can be engaged or disengaged only when the clutch is open.

7. A vehicle according to any of claims 1 to 6, **characterised in that** the gear unit is an automatic unit which, in accordance with a set switching logic, can be actuated or shifted by an electronic unit in dependence on various vehicle parameters.

8. A vehicle according to any of claims 1 to 7, **characterised in that** a composite instrument (8) within view of the driver optically indicates the current engaged gear.

9. A vehicle according to any of claims 1 to 8, **characterised in that** an indicator element is provided on the selector element (7) for optically indicating the current engaged gear.

10. A vehicle according to any of claims 1 to 9, **characterised in that** the selector element (7) can select a number of gears each associated with a set end position of the selector element (7), wherein the end positions are arranged in two or more parallel lanes in an H pattern.

11. A vehicle according to any of claims 1 to 10, **characterised in that** in dependence on one or more current vehicle parameters, especially the speed, movement of the selector element (7) towards an end position is blocked, or at least movement of the selector element (7) into an end position and engagement of the respective gear.

## Revendications

1. Véhicule comportant :
- une transmission (1) munie d'au moins un actionneur commandable (2) qui est prévu pour permettre de mettre en prise et/ou hors de prise au moins une vitesse de la boite de vitesse,
- un élément de sélection (7) destiné à être actionné manuellement au moyen duquel l'actionneur peut être commandé, et au moins une vitesse peut ainsi être mise en prise ou hors de prise, pour permettre la mise en prise d'une vitesse l'élément de sélection (7) devant, tout d'abord être déplacé dans la direction d'une position terminale prédéfinie associée à la vitesse concernée, l'élément de sélection (7) ne pouvant ensuite être déplacé dans la position terminale associée à la vitesse concernée que lorsque la vitesse concerné est effectivement enclenchée,
**caractérisé en ce que**
• l'actionneur (2) est un actionneur commandable électriquement ou hydrauliquement, et
• l'élément de sélection (7) est enclenché manuellement de façon visible dans la position terminale associée à la vitesse concernée dès que la vitesse concernée est atteinte.

2. Véhicule conforme à la revendication 1,
**caractérisé en ce que**
l'élément de sélection (7) est monté sur un élément mécanique-électronique (6) qui produit des signaux de commande correspondant à la position de l'élément de sélection (7) et ne permet un déplacement de l'élément de sélection (7) dans la position terminale associée à une vitesse que lorsque cette vitesse a effectivement été enclenchée.

3. Véhicule conforme à la revendication 2,
**caractérisé en ce qu'**
il est prévu un système de capteur relié électriquement à l'élément mécanique-électronique (6) qui détecte si la vitesse sélectionnée à effectivement été enclenchée.

4. Véhicule conforme à l'une des revendications 2 et 3,
**caractérisé en ce que**
l'élément mécanique-électronique (6) comporte un dispositif amortisseur qui amortit le déplacement de l'élément de sélection (7) dans une position terminale ou l'arrête tant que la vitesse associée à la position terminale n'a pas encore été enclenchée.

5. Véhicule conforme à l'une des revendications 1 à 4,
**caractérisé en ce que**
la boite de vitesse (1) est une boite de vitesse à commutation manuelle qui ne peut être commutée d'une vitesse à une autre vitesse de la boite de vitesse que par actionnement de l'élément de sélection (7).

6. Véhicule conforme à l'une des revendications 1 à 5,
**caractérisé en ce qu'**
il est prévu un embrayage actionnable au moyen d'une pédale de pied, et la mise en prise ou hors de prise d'une vitesse de la boite de vitesse n'est autorisée que lorsque cet embrayage est ouvert.

7. Véhicule conforme à l'une des revendications 1 à 6,
**caractérisé en ce que**
la boite de vitesse est une boite de vitesse automatique qui est commandée ou commutée par une électronique conformément à une logique de commutation prédéfinie en fonction de différents paramètres d'état de déplacement.

8. Véhicule conforme à l'une des revendications 1 à 7,
**caractérisé en ce que**
la vitesse momentanément enclenchée est optiquement affichée, dans un instrument incorporé (8) monté dans la zone de vision du conducteur.

9. Véhicule conforme à l'une des revendications 1 à 8,
**caractérisé en ce que**
sur l'élément de sélection (7) est prévu un dispositif d'affichage sur lequel la vitesse momentanément enclenchée est indiquée optiquement.

10. Véhicule conforme à l'une des revendications 1 à 9,
**caractérisé en ce que**
l'élément de commutation (7), permet de sélectionner plusieurs vitesses de la boite de vitesse auxquelles est respectivement associée une position terminale prédéfinie de l'élément de sélection (7), ces positions terminales étant situées conformément à un schéma en forme de H sur deux ou en plus grand nombre de lignes de commutation parallèles.

11. Véhicule conforme à l'une des revendications 1 à 10,
**caractérisé en ce qu'**
en fonction d'un ou de plusieurs paramètres d'état de déplacement actuellement présents en particulier de la vitesse du véhicule, un déplacement de l'élément de commutation (7) en direction d'une position terminale, au moins toutefois un déplacement de l'élément de sélection (7) dans une position terminale et un enclenchement de la vitesse de la boite de vitesse concernée sont bloqués.
